Europäisches Patentamt

European Patent Office

Office européen des brevets

(11) Veröffentlichungsnummer: **0 364 625**
**A2**

(12) **EUROPÄISCHE PATENTANMELDUNG**

(21) Anmeldenummer: **88120577.7**

(22) Anmeldetag: **09.12.88**

(51) Int. Cl.⁵: **G06F 12/06**

(30) Priorität: **19.10.88 CH 3890/88**

(43) Veröffentlichungstag der Anmeldung:
**25.04.90 Patentblatt 90/17**

(84) Benannte Vertragsstaaten:
**AT BE CH DE ES FR GB IT LI LU NL SE**

(71) Anmelder: **Furrer, Frank J., Dr.**
**Ringstrasse 15**
**CH-8953 Birmensdorf(CH)**

(72) Erfinder: **Furrer, Frank J., Dr.**
**Ringstrasse 15**
**CH-8953 Birmensdorf(CH)**

(74) Vertreter: **Steudtner, Werner, Dipl.-Ing.**
**Lindenhof 5**
**CH-8604 Hegnau bei Zürich(CH)**

(54) **Ein- und Ausgabesystem zum Anschluss an einen Computer.**

(57) Ein- und Ausgabesystem zum Anschluss an einen programmgesteuerten Computer mit einer Vielzahl von einzeln ansteuerbaren Ein- und/oder Ausgabeeinheiten, von denen jede Mittel zur Speicherung einer der Einheit zugeordneten Adresse enthält. Bei dem System wird durch Anordnung der Ein- und/oder Ausgabeeinheiten (1) als Kettenglieder einer Kette solcher Einheiten (1) ermöglicht, dass die Adressen der Ein- und/oder Ausgabeeinheiten (1) aufgrund dieser dem Computer (8) bekannten Anordnung z.B. der Reihenfolge nach vom Computer (8) in die Adressspeicher-Teile (3) bzw. die darin enthaltenen Adressspeichermittel eingespeichert werden können und nicht mehr wie bisher in jede Ein- und/oder Ausgabeeinheit bzw. den zugehörigen Stecker einzeln bei der Montage derselben eingespeichert werden müssen. Dadurch können Fehler bei der Adressspeicherung, mit denen bisher insbesondere bei der Montage unter Zeitdruck wie z.B. bei Auswechseln von ausgefallenen Einheiten während des Betriebes immer gerechnet werden musste, und besonders auch die möglichen schwerwiegenden Folgen solcher Fehler ausgeschlossen werden.

Fig. 1

## Ein- und Ausgabesystem zum Anschluss an einen Computer

Die Erfindung bezieht sich auf ein Ein- und Ausgabesystem zum Anschluss an einen programmgesteuerten Computer mit einer Vielzahl von einzeln ansteuerbaren Ein- und/oder Ausgabeeinheiten, von denen jede Mittel zur Speicherung einer der Einheit zugeordneten Adresse enthält.

Ein- und Ausgabesysteme dieser Art werden hauptsächlich in der Industrie in Verbindung mit einem zur Steuerung industrieller Prozesse vorgesehenen sogenannten zentralen Prozessrechner verwendet und dienen zur Umsetzung der vom Computer bzw. vom zentralen Prozessrechner gelieferten Schwachstomsignale in sogenannte Industriesignale, die aus Sicherheitsgründen zur Vermeidung äusserer Störeinflüsse wesentlich leistungsstärker als die vom Compu ter kommenden Schwachstromsignale sein müssen, und umgekehrt zur Umsetzung von Industriesignalen in vom Computer verarbeitbare Schwachstromsignale.

Da nun bei den meisten industriellen Prozessen die zur Prozesssteuerung erforderliche Steuergeschwindigkeit wesentlich geringer als die Arbeitsgeschwindigkeit eines Computers ist, können mit einem einzigen - wie der Name sagt - zentralen Prozessrechner sämtliche industriellen Prozesse einer ganzen Industrieanlage gesteuert werden, d.h. der zentrale Prozessrechner kann wegen seiner gegenüber den erforderlichen Steuergeschwindigkeiten ausserordentlich hohen Arbeitsgeschwindigkeit über ein geeignetes Ein- und Ausgabesystem hunderte verschiedener Einzelprozesse steuern. Bei einer so grossen Anzahl von zu steuernden Einzelprozessen und je einer Ein- und/oder Ausgabeeinheit pro Einzelprozess wäre es nun nicht zweckmässig, jede einzelne Ein- und/oder Ausgabeeinheit über eine gesonderte Leitung mit dem zentralen Prozessrechner zu verbinden, zumal die Ein- und/oder Ausgabeeinheiten wegen ihres bei der grossen Anzahl relativ hohen Leistungsverbrauches in einem von dem klimatisierten Raum des zentralen Prozessrechners gesonderten Raum angeordnet werden und daher bei einer Verbindung jeder einzelnen Ein- und/oder Ausgabeeinheit mit dem zentralen Prozessrechner über eine gesonderte Leitung hunderte von Leitungen von in der Regel über zehn Metern Länge zwischen dem Raum mit dem zentralen Prozessrechner und dem Raum mit dem Ein- und Ausgabesystem verlegt werden müssten. Daher ist bei den bekannten Ein- und Ausgabesystemen der eingangs genannten Art nur eine Leitung zwischen dem zentralen Prozessrechner und dem Ein- und Ausgabesystem vorgesehen, an die die einzelnen Ein- und/oder Ausgabeeinheiten parallel angeschlossen sind, und die vom zentralen Prozessrechner an die einzelnen Ein- und/oder Ausgabeeinheiten zu übertragenden Daten werden mit einer Adresse versehen, so dass die an die gemeinsame Datenübertragungsleitung angeschlossenen Ein- und/oder Ausgabeeinheiten durch Adressvergleich mit ihrer eigenen Adresse erkennen können, ob die vom Prozessrechner über die gemeinsame Datenübertragungsleitung übertragenen Daten für sie bestimmt sind oder nicht bzw. ob der Prozessrechner die bei einer Eingabeeinheit oder dem Eingabeteil einer Ein- und Ausgabeeinheit vorliegenden Daten über die gemeinsame Datenübertragungsleitung abrufen will oder nicht. Zu dieser Form der Datenübertragung zwischen dem Prozessrechner und den einzelnen Ein- und/oder Ausgabeeinheiten muss natürlich in jeder einzelnen Ein- und/oder Ausgabeeinheit die ihr zugeordnete, zu dem Adressvergleich erforderliche eigene Adresse gespeichert sein, und damit diese eigene Adresse bei Betriebsstörungen wie z.B. Stromausfällen nicht verlorengehen kann, handelt es sich bei dieser Speicherung der eigenen Adresse in den einzelnen Ein- und/oder Ausgabeeinheiten grundsätzlich um eine Festwertspeicherung, d.h. die der einzelnen Ein- und/oder Ausgabeeinheit zugeordnete Adresse wird bei Inbetriebnahme derselben z.B. mechanisch durch Schliessung von Kontakten in einer Kontaktreihe für binäre "1"en und Offenlassen von Kontakten für binäre "0"en oder auch elektromagnetisch mit Hilfe von in den Ein- und/oder Ausgabeeinheiten vorgesehenen setzbaren Ferritkernspeichern fest gespeichert.

Diese Einspeicherung der eigenen Adresse in den Ein- und/oder Ausgabeeinheiten bei Inbetriebnahme derselben bringt jedoch besonders bei der Steuerung industrieller Prozesse beträchtliche Gefahren mit sich, weil bei Einspeicherung einer falschen Adresse Teile der Steuerung eines industriellen Prozesses ausfallen, was unter Umständen z.B. bei der Steuerung chemischer Prozesse katastrophale Folgen wie die Explosion einer ganzen Industrieanlage zur Folge haben kann. Besonders gefährlich ist in dieser Hinsicht, wenn eine Ein- und/oder Ausgabeeinheit während des Betriebes kaputt geht und ausgewechselt werden muss, denn beim Auswechseln einer solchen kaputten Einheit gegen eine neue muss natürlich in die neue Einheit wieder die der Einheit zugeordnete eigene Adresse eingespeichert werden, und da ein solches Auswechseln während des Betriebes meist unter Zeitdruck durchgeführt werden muss, sind in diesem Fall Fehler bei der Einspeicherung der Adresse in die neue Einheit relativ leicht möglich.

Der Erfindung lag nun die Aufgabe zugrunde, ein Ein- und Ausgabesystem der eingangs genannten Art zu schaffen, bei dem eine fehlerhafte Einspeicherung der den einzelnen Ein-und/oder Ausgabeeinheiten zugeordneten Adressen und die dadurch verursachten Gefahren ausgeschlossen sind.

Erfindungsgemäss wird das mit einem Ein- und Ausgabesystem der eingangs genannten Art dadurch erreicht,dass die einzelnen Ein- und/oder Ausgabeeinheiten Kettenglieder von mindestens einer Kette solcher Einheiten bilden,in der das erste Kettenglied mit dem Computer und alle übrigen Kettenglieder mindestens in Bezug auf wenigstens eine für die Adressspeicherung dienende Leitung oder Leitungsader mit dem jeweils vorangehenden Kettenglied verbunden sind,und dass die in den einzelnen Ein- und/oder Ausgabeeinheiten vorgesehenen Mittel zur Speicherung der der Einheit zugeordneten Adresse einen elektronisch einstellbaren Adressspeicher und Mittel zur elektronischen Einstellung des adressspeicher auf eine vom Computer gelieferte Adresse und Mittel zur Abkoppelung des Adressspeichers von den Einstellmitteln nach der Einstellung sowie zur erneuten Ankoppelung des Adressspeichers an die Einstellmittel vor einer Neueinstellung umfassen.

Hauptvorteil des vorliegenden Ein- und Ausgabesystems ist, dass die Kettenanordnung der Ein- und/oder Ausgabeeinheiten die Einspeicherung der den einzelnen Einheiten zugeordneten Adressen durch den Computer ermöglicht, weil der Computer den von den einzelnen Einheiten gebildeten Kettengliedern der Kette der Reihenfolge nach Adressen zuordnen kann und damit die Adressen der einzelnen Kettenglieder kennt und demgemäss mit jedem einzelnen Kettenglied in Datenverkehr treten kann. Ein weiterer wichtiger Vorteil der Kettenanordnung ergibt sich,wenn jedes der genannten übrigen Kettenglieder über eine sämtliche zum Verkehr mit dem Computer vorgesehenen Leitungen umfassende Sammelleitung mit dem jeweils vorangehenden Kettenglied verbunden ist, und zwar im Zusamenhang mit der Neueinrichtung oder Erweiterung des vorliegenden Ein-und Ausgabesystems,denn bei einer solchen Kettenanordnung ist nicht wie bei den bekannten Ein- und Ausgabesystemen der vorliegenden Art eine mit Abzweigungen für jede Ein- und/oder Ausgabeeinheit versehene, in der Regel fest installierte gemeinsame Datenübertragungsleitung erforderlich sondern nur Verbindungen zwischen den einzelnen Kettengliedern, die relativ kurz gehalten und daher als sogenannte fliegende, d.h. nicht fest installierte Verbindungen ausgebildet werden können und in einigen Standardlängen mit Steckern an beiden Enden direkt vom Herstellerwerk des Ein- und Ausgabesystems geliefert werden können, so dass am Aufstellungsort des Ein- und Ausgabesystems mit Ausnahme der Verbindungsleitung zwischen Computer und erstem Kettenglied sowie der Stromversorgung und der Anschlüsse für die Industriesignale überhaupt keine elektrischen Installationen vorgenommen werden müssen, wodurch erstens der Installationsaufwand beträchtlich herabgesetzt wird und zweitens Erweiterungen des Systems um zusätzliche Ein- und/oder Ausgabeeinheiten praktisch ohne Installationsaufwand vorgenommen werden können und - was noch wichtiger ist - jede Fehlermöglichkeit bei Aufstellung und Erweiterung des Ein- und Ausgabesystems ausgeschlossen ist.

Bei einer besonders vorteilhaften Ausbildungsform des vorliegenden Systems umfassen die Einstellmittel in jeder Ein-und/oder Ausgabeeinheit eine Adressleitung und Verbindungsmittel zur Adressleitung des nächsten Kettengliedes sowie Schaltmittel zur Steuerung der An- und Abkoppelung des Adressspeichers an die bzw. von der Adressleitung,vorzugsweise in Form von Umschaltmitteln zur alternativen Ankopplung der Adressleitung an den Adressspeicher oder die Verbindungsmittel. Bei dieser Ausbildungsform des vorliegenden Systems werden die Adressen vom Computer in die einzelnen Kettenglieder der Kette in zeitlicher und örtlicher Reihenfolge der Kettenglieder eingespeichert, d.h. es werden vor der Einspeicherung der Adressen die Umschaltmittel sämtlicher Kettenglieder so eingestellt, dass die Verbindungen zwischen den Adressleitungen der einzelnen Kettenglieder unterbrochen sind, und dann werden nacheinander in einer der örtlichen Reihenfolge der Kettenglieder entsprechenden zeitlichen Reihenfolge die den einzelnen Kettengliedern zugeordneten Adressen einzeln vom Computer geliefert und in den Adressspeicher des zugeordneten Kettengliedes durch Ankopplung des Adressspeichers an die Adressleitung eingespeichert, wonach der Adressspeicher wieder von der Adressleitung abgekoppelt und die Adressleitung an die Adressleitung des nächsten Kettengliedes angekoppelt wird, wo sich der Vorgang der Adresseinspeicherung in gleicher Weise wiederholt. Von Vorteil ist bei dieser Ausbildungsform des vorliegenden System, dass der Computer jeweils nach der Einspeicherung einer Adresse die Richtigkeit der Einspeicherung überprüfen kann und im Falle einer Fehleinspeicherung der Adresse die Einspeicherung derselben Adresse nochmals wiederholen kann, während der Computer bei einer Ueberprüfung der Richtigkeit der Einspeicherung der Adressen nach der Einspeicherung sämtlicher Adressen im Falle der Fehleinspeicherung einer Adresse die Einspeicherung sämtlicher Adressen wiederholen müsste. Daher ist diese Ausbildungsform besonders für Ein und Ausgabesysteme mit einer sehr grossen Anzahl von Ein- und/oder Ausgabeeinheiten geeignet, wo die für die Einspeicherung sämtlicher Adressen erforderliche Zeit nicht mehr vernachlässigbar klein ist und daher eine unter Umständen erforderliche mehrfache Wiederholung der Einspeicherung sämtlicher Adressen einen unerwünscht grossen Zeitverlust verursachen würde.

Bei einer anderen ebenfalls sehr vorteilhaften Ausbildungsform des vorliegenden Systems umfassen die Einstellmittel in jeder Ein- und/oder Ausgabeeinheit einen Teil eines zur Zwischenspeicherung von Adressen oder Adressteilen sowie zur Weiterbeförderung derselben von Kettenglied zu Kettenglied vorgesehenen Schieberegisters, eine über den Schieberegisterteil führende Adressleitung mit Verbindungsmitteln zum Anschluss der Adressleitungen der benachbarten Kettenglieder, eine an den Schieberegisterteil angeschlossene Steuerleitung zur Uebertragung von Schiebeimpulsen und Datenübertragungsmittel zur Uebertragung von in dem Schieberegisterteil stehenden Daten auf den Adressspeicher. Im Gegensatz zu der erstgenannten Ausbildungsform werden bei dieser anderen Ausbildungsform des vorliegenden Systems die Adressen vom Computer in die einzelnen Kettenglieder der Kette nur in der örtlichen Reihenfolge der Kettenglieder, zeitlich jedoch gleichzeitig eingespeichert, d.h. die den einzelnen Kettengliedern zugeordneten Adressen werden in der örtlichen Reihenfolge der Kettenglieder in das Schieberegister eingeschoben und befinden sich dann in dem zugeordneten Kettenglied, wenn sämtliche Adressen in das Schieberegister eingeschoben sind, und werden daraufhin alle gleichzeitig in die Adressspeicher der zugeordneten Kettenglieder eingespeichert. Von Vorteil ist bei dieser anderen Ausbildungsform des vorliegenden Systems, dass die Einspeicherung sämtlicher Adressen wesentlich schneller als bei der erstgenannten Ausbildungsform geht, so dass die Ueberprüfung der Richtigkeit der Einspeicherung der Adressen, die hier nur nach der Einspeicherung sämtlicher Adressen vorgenommen werden kann und somit bei bei Fehleinspeicherung einer Adresse die Wiederholung der Einspeicherung sämtlicher Adressen erfordern würde, trotz einer solchen unter Umständen erforderlichen mehrfachen Wiederholung der Einspeicherungsämtlicher Adressen maximal nicht sehr viel mehr Zeit erfordern kann, als die Einspeicherung sämtlicher Adressen einschliesslich Ueberprüfung auf Richtigkeit und Korrektur bei Fehleinspeicherung bei der erstgenannten Ausbildungsform erfordert, dass aber die insgesamt für die Einspeicherung sämtlicher Adressen und deren Ueberprüfung auf Richtigkeit erforderliche Zeit bei dieser anderen Ausbildungsform wesentlich geringer als bei der erstgenannten Ausbildungsform ist, wenn sich - was ja der Regelfall ist - bei der Ueberprüfung auf Richtigkeit keine Fehleinspeicherung ergibt. Ein weiterer Vorteil dieser anderen Ausbildungsform des vorliegenden Systems ist, dass der für die Adressspeicherung durch den Computer erforderliche technische Aufwand hier relativ sehr gering ist.

Bei allen Ausbildungsformen des vorliegenden Systems ist es von Vortiel, wenn die Mittel zur An- und Abkopplung des Adressspeichers an die bzw. von den Einstellmitteln mit dem Adressspeicher kombinierte Setzmittel sind, mit denen der Adressspeicher beim Anlegen eines Setzsignals an den Adressspeicher bzw. die mit diesem kombinierten Setzmittel an die Einstellmittel angekoppelt wird und bei Fehlen eines solchen Setzsignals von den Einstellmitteln abgekoppelt ist, und jede Ein-und/oder Ausgabeeinheit eine Setzleitung zur Uebertragungeines vom Computer gelieferten Setzsignals an den Adressspeicher bzw. die mit diesem kombinierten Setzmittel umfasst. Der Vorteil dabei ist, dass mit Setzmitteln versehene Speicher Standardbauteile sind und der technische Aufwand für dieselben daher geringer als für einen gesonderten Adressspeicher und ein gesondertes vorgeschaltetes, die Funktion der Setzmittel übernehmendes Gatter ist.

Zweckmässig können die Ein- und/oder Ausgabeeinheiten bei dem vorliegenden System ferner Mittel zur Lieferung von Informationen an den Computer in Störfällen umfassen. Solche Mittel sind bei dem vorliegenden System nicht zwingend erforderlich, weil die Adressspeicherung durch den Computer z.B. auch durch Knopfdruck am Computer selbst oder über eine nicht zum vorliegenden System gehörende, zum Computer führende Steuerleitung eingeleitet werden kann, aber natürlich ist es sehr sinnvoll, wenn solche Mittel bei den Ein- und/oder Ausgabeeinheiten des vorliegenden Systems vorgesehen sind und damit in Störfällen und besonders in solchen Störfällen, in denen die in den Ein- und/oder Ausgabeeinheiten eingespeicherten Adressen verlorengehen können, wie beispielsweise bei kurzzeitigen Stromausfällen oder bei dem schon oben erwähnten Auswechseln einer kaputten Einheit durch eine neue automatisch eine neue Adressspeicherung durch den Computer eingeleitet werden kann. Für Störfälle in Form von Stromausfällen kann z.B. vorteilhaft in jeder Ein-und/oder Ausgabeeinheit ein mechanisches oder elektronisch nachgebildetes Relais vorgesehen sein, das bei Stromausfall abfällt und nach Beendigung des Stromausfalls in dem abgefallenen Zustand verbleibt, bis es durch ein die Beseitigung der Störung wie z.B. die Wiedereinspeicherung einer durch den Stromausfall verlorengegangenen Adresse anzeigendes Setzsignal wieder in den angezogenen Zustand gesetzt wird, und das im abgefallenen Zustand eine Information an den Computer liefert, durch die u.a. eine neue Adressspeicherung durch den Computer eingeleitet wird. Ein solches Relais würde beispielsweise auch beim Auswechseln einer kaputten Einheit durch eine neue automatisch eine neue Adresseinspeicherung durch den Computer einleiten, weil die anstelle der kaputten Einheit einzusetzende neue Einheit ja vor dem Einsetzen stromlos ist und sich das Relais derselben daher auch nach dem Einsetzen im abgefallenen Zustand befindet und somit eine die neue Adresseinspeicherung veranlassende Information an den Computer liefert. Die Mittel zur Lieferung von Informationen an den Computer in Störfällen können aber z.B. auch Störerkennungsmittel in jeder Ein- und/oder Ausgabeeinheit umfassen, die Informationen über Störungen an den Computer liefern, die vom Computer selbst im normalen Datenverkehr mit den Ein- und/oder Ausgabeeinheiten nicht unmittelbar erkannt werden können, wie z.B. in dem Fall, dass der in der Ein- und/oder Ausgabeeinheit vorgesehene Umsetzer zur Umsetzung der vom Computer gelieferten Signale in Industriesignale nicht mehr innerhalb der vorgeschriebenen Toleranzen arbeitet und daher ein Auswechseln der betreffenden Einheit oder aber eine interne Nachstellung des betreffenden Umsetzers erforderlich ist. In solchen Störfällen, in denen die in der Ein- und/oder Ausgabeeinheit gespeicherte Adresse nicht unmittelbar betroffen ist, wird natürlich nicht sofort sondern z.B. erst aufgrund eines durch den Störfall notwendig gewordenen Auswechselns der betreffenden Einheit eine neue Adressspeicherung durch den Computer eingeleitet, aber eine neue Adresseinspeicherung durch den Computer steht in praktisch allen Fällen in einem unmittelbaren oder mittelbaren Zusammenhang mit einem Störfall, und daher ist es wie zuvor schon erwähnt ausserordentlich zweckmässig, das vorliegende System auch mit Mitteln zur Lieferung von Informationen an den Computer in Störfällen zu versehen.

Vorteilhaft können bei dem vorliegenden System die Ein-und/oder Ausgabeeinheiten weiter Mittel zur Lieferung von Informationen über die Identität der betreffenden Einheit an den Computer enthalten. Solche Mittel sind insbesondere dann vorteilhaft, wenn das Ein- und Ausgabesystem verschiedenartige Ein- und/oder Ausgabeeinheiten umfasst, denn beim Auswechseln einer kaputten Einheit durch eine neue kann es natürlich vorkommen, dass anstelle der kaputten Einheit eine andersartige neue Einheit eingesetzt wird, und in einem solchen Fall muss der Computer natürlich erkennen können, dass eine falsche Einheit eingesetzt worden ist, wenn jede Fehlermöglichkeit bei einem solchen Auswechseln ausgeschlossen sein soll. Die Mittel zur Lieferung von Informationen über die Identität einer Ein- und/oder Ausgabeeinheit können dabei vorteilhaft einen in der Ein- und/oder Ausgabeeinheit vorgesehenen Festwertspeicher, in den schon bei der Herstellung der betreffenden Ein- und/oder Ausgabeeinheit Identitätsinformationen wie die Typenbezeichnung und eventuell als Gütekriterium auch das Herstellerwerk fest eingespeichert werden, und ferner in der Ein- und/oder Ausgabeeinheit vorgesehene Mittel umfassen, um den Speicherinhalt des Festwertspeichers auf Abruf des Computers von der betreffenden Ein- und/oder Ausgabeeinheit an den Computer zu übertragen, so dass der Computer durch Aufruf der Adresse der betreffenden Ein- und/oder Ausgabeeinheit und Abruf der Informationen des Festwertspeichers anhand einer im Computer gespeicherten Liste feststellen kann, ob die Ein- und /oder Ausgabeeinheit mit der aufgerufenen Adresse die gleiche Typenbezeichnung wie in der im Computer gespeicherten Liste aufweist oder nicht und somit eirichtige oder falsche Einheit ist.

Mit besonderem Vorteil können die Ein- und/oder Ausgabeeinheiten bei dem vorliegenden System schliesslich Speichermittel zur Speicherung von die Funktionsweise der betreffenden Ein- und/oder Ausgabeeinheit bestimmenden Steuerbefehlen bzw. - programmen und Mittel zur Aktivierung derselben durch den Computer enthalten. Solche Steuerbefehle bzw. -programme können beispielsweise zu der oben erwähnten internen Nachstellung von Umsetzern in Fällen, in denen der Umsetzer nicht mehr innerhalb der vorgeschriebenen Toleranzen arbeitet, oder auch allgemein zur internen Ueberprüfung der einzelnen Bauelemente der Ein- und oder Ausgabeeinheit oder z.B. dazu dienen, die Verwendung eines einzigen Types von Ein- und/oder Ausgabeeinheiten für das gesamte Ein- und Ausgabesystem zu ermöglichen, indem in jeder Ein- und/oder Ausgabeeinheit sozusagen mehrere Typen solcher Einheiten vereinigt sind und mittels der Steuerbefehle bzw. - programme vom Computer der gewünschte Typ eingestellt werden kann, so dass die obenerwähnte Fehlermöglichkeit, beim Auswechseln einer kaputten Einheit anstatt einer richtigen eine falsche neue Einheit einzusetzen, wegfallen würde. Allgemein ist der grosse Vorteil einer solchen Ausbildung, dass der Computer den grössten Teil aller möglichen Fehler selbst beheben kann und daher der Wartungsaufwand für das Ein- und Ausgabesystem auf ein Minimum beschränkt wird.

Anhand der nachstehenden Figuren ist die Erfindung im folgenden an einigen Ausführungsbeispielen näher erläutert.

Es zeigen

Fig. 1 ein Schema des prinzipiellen Aufbaues eines Ein-und Ausbagesystems nach der Erfindung mit einer Vielzahl von die Kettenglieder einer Kette bildenden Ein- und Ausgabeeinheiten,die sich aus konventionellen Ein-Ausgabe-Teilen E/A und zugeordneten Adressspeicher-Teilen ADR zusammensetzen; elektrisch gleichwertige Aufbauschemen in Fig. 1a bis 1d

Fig. 2 und 2a Ausführungsbeispiele von Ein-Ausgabe-Teilen E/A in den Figuren 1 und 1a bis 1d

Fig. 3 und 3a sowie 4 und 5 Ausführungsbeispiele von Adressspeicher-Teilen ADR in den Figuren 1 und 1a bis 1d

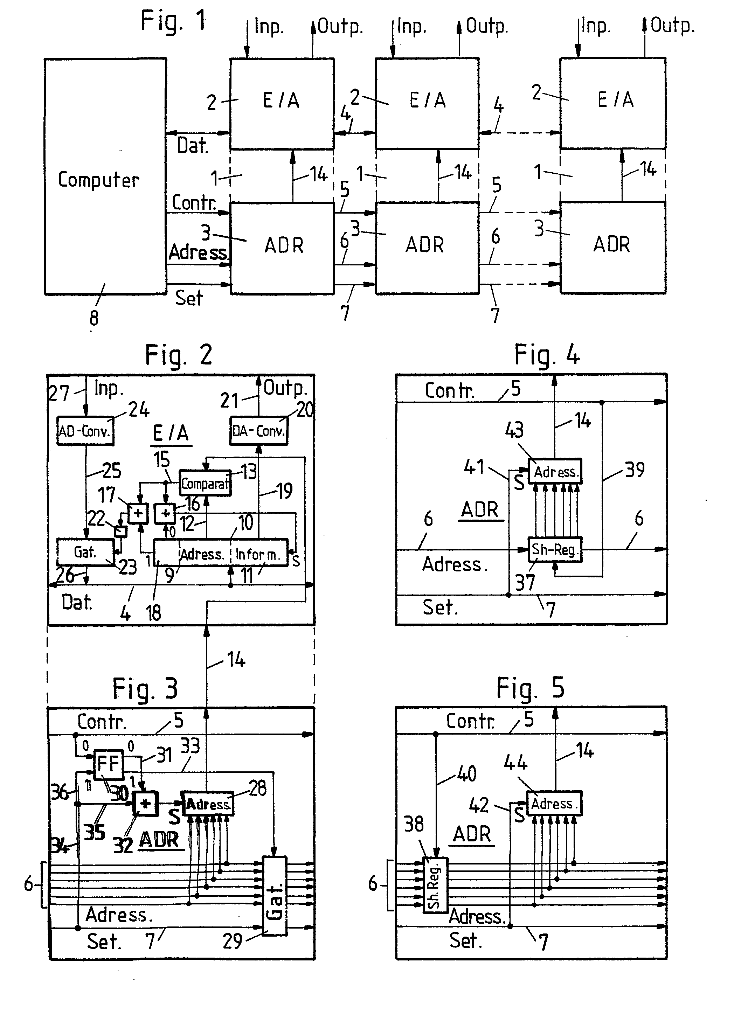

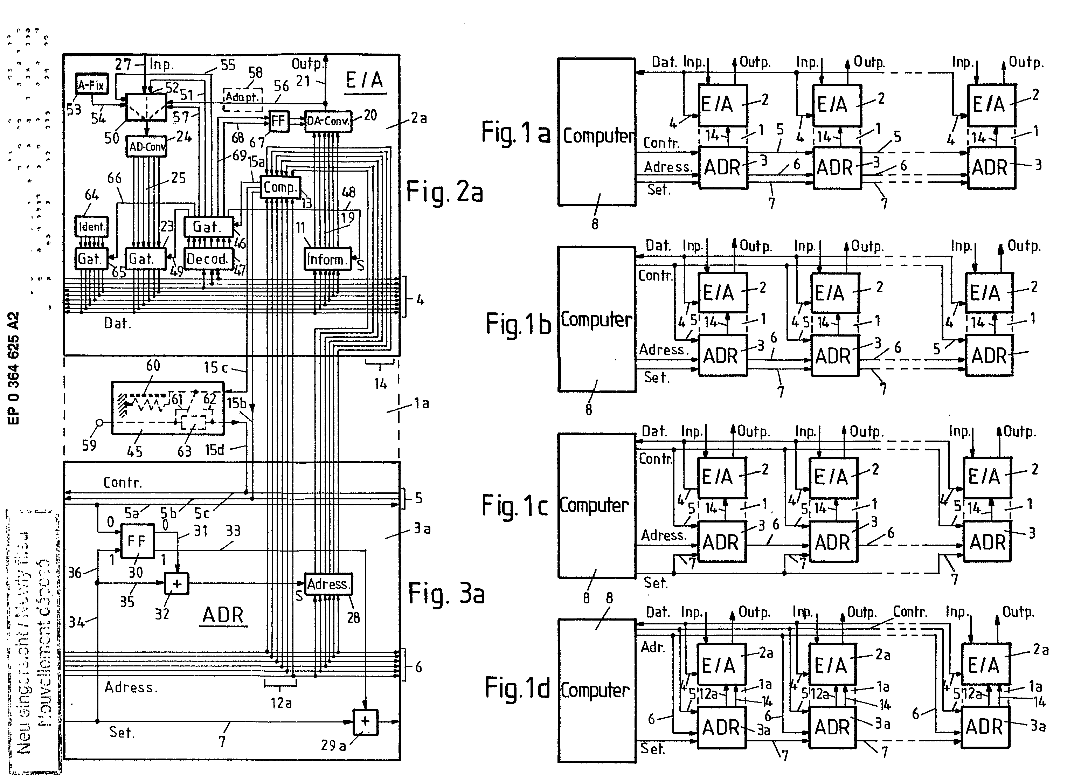

Bei dem in Fig. 1 gezeigten prinzipiellen Aufbau eines Ein-und Ausgabesystems setzen sich die Ein- und Ausgabeeinheiten 1 aus je einem mit E/A bezeichneten Ein-Ausgabe-Teil 2 und je einem mit ADR bezeichneten Adressspeicher-Teil 3 zusammen und bilden die Kettenglieder einer Kette, in der jeweils benachbarte Kettenglieder bzw. Ein- und Ausgabeeinheiten 1 durch eine nur vom einen zum nächsten Kettenglied führende Sammelleitung verbunden sind, die sich bei dem in Fig. 1 gezeigten Beispiel aus einer Datenleitung 4, einer Steuerleitung 5, einer Adressleitung 6 und einer Setzleitung 7 zusammensetzt. Die einzelnen zu der Sammelleitung gehörenden Leitungen, also z.B. in Fig. 1 die Leitungen 4, 5, 6 und 7, können selbstverständlich ein oder mehrere Adern umfassen, beispielsweise je nach dem, ob die Signale über diese Leitungen parallel oder seriell übertragen werden sollen, oder z.B. bei der Steuerleitung 5, ob nur Steuerinformationen einer bestimmten Art oder Steuerinformationen unterschiedlicher Art übertragen werden sollen. Beispielsweise kann die Steuerleitung 5 neben einer Ader für die Steuerung der Adressspeicherung noch eine ganze Reihe andere Adern für andere Steuerzwecke wie z.B. ein oder mehrere Adern zur Uebertragung von Informationen in Störfällen von den einzelen Ein- und Ausgabeeinheiten 1 zum Computer 8 umfassen, und das gleiche gilt sinngemäss auch für die Setzleitung 7. Innerhalb der die Kettenglieder der Kette bildenden einzelnen Ein- und Ausgabeeinheiten 1 sind die Leitungen, die zwischen benachbarten Kettengliedern zusammen jeweils eine Sammelleitung bilden - also im Beispiel in Fig. 1 die Leitungen 4, 5, 6 und 7 - wie aus den Figuren 2 bis 5 ersichtlich entweder direkt oder über zwischengeschaltete steuerbare Uebertragungsglieder wie Gatter, Schieberegister usw. durchgezogen, so dass der Computer 8 über diese Leitungen 4, 5, 6 und 7 mit jeder Ein- und Ausgabeeinheit 1 der Kette in Verbindung treten kann.

Die mit E/A bezeichneten Ein-Ausgabe-Teile 2 der Ein- und Ausgabeeinheiten 1 können irgendwelche bekannten Ein- und Ausgabeeinheiten sein bzw. irgendeinen konventionellen Aufbau haben, mit dem einzigen Unterschied, dass sie keinen Festwertspeicher für die Adressspeicherung aufweisen, weil für die Adressspeicherung hier ja der mit ADR bezeichnete gesonderte Adressspeicher-Teil 3 vorgesehen ist, der anstelle eines solchen Festwertspeichers bei den be kannten Ein- und Ausgabeeinheiten tritt. Nur der Vollständigkeit halber ist daher hier in Fig. 2 ein besonders einfaches Beispiel gezeigt, wie die Ein-Ausgabe-Teile 2 der Ein- und Ausgabeeinheiten 1 bzw. die Blöcke E/A in Fig. 1 innen ausgebildet sein können, wobei in diesem Beispiel nur die Grundfunktionen von Ein- und Ausgabeeinheiten bekannter Ein- und Ausgabesysteme realisiert sind, während die Ein- und Ausgabeeinheiten bekannter Ein- und Ausgabesysteme in der Regel noch eine Reihe weiterer Bestandteile zur Erfüllung von über die Grundfunktionen hinausgehenden Spezialaufgaben enthalten. Die Wirkungsweise des in Fig. 2 gezeigten Ein-Ausgabe-Teils 2 ist kurz gesagt folgende: Ueber die Datenleitung 4 werden vom Computer 8 auf den Ein-Ausgabe-Teil 2 Datenblöcke mit je einem Adressteil und einem Informationsteil übertragen. Der Adressteil eines solchen Datenblockes gelangt unmittelbar in den für die Adresse vorgesehenen Teil 9 des Zwischenspeichers 10, während der Informationsteil des Datenblockes zunächst vor dem dafür vorgesehenen Teil 11 des Zwischenspeichers 10 stehenbleibt. In dem Adressteil des Datenblockes ist die Adresse von einem der Ein-Ausgabe-Teile 2 und als der Adresse vorangestelltes erstes Bit die Angabe enthalten, ob der Computer mit dem Eingabeteil oder dem Ausgabeteil des betreffenden Ein-Ausgabe-Teils 2 in Datenverkehr treten will. Die im Teil 9 des Zwischenspeichers 10 stehende Adresse wird nun über die Leitung 12 an den Comparator 13 weitergeleitet, der diese Adresse mit der über die Leitung 14 vom Adressspeicher-Teil 3 gelieferten Adresse dieses Ein-Ausgabe-Teils 2 vergleicht und bei Uebereinstimmung beider Adressen über seine Ausgangsleitung 15 an die beiden UND-Schaltungen 16 und 17 ein eine binäre "1" darstellendes Schaltsignal abgibt. Durch das erwähnte, der Adresse vorangestellte erste Bit,das in der ersten Speicherzelle 18 des Teiles 9 des Zwischenspeichers 10 steht, ist bereits festgelegt, welche der beiden UND-Schaltungen 16 und 17 durch das Schaltsignal auf der Leitung 15 durchgeschaltet wird, nämlich die UND-Schaltung 16, wenn in der Speicherzelle 18 eine binäre "0" steht, oder die UND-Schaltung 17, wenn in der Speicherzelle 18 eine binäre "1" steht. Im ersteren Falle gibt die UND-Schaltung 16 an die Setzeingänge der Speicherzellen des Teiles 11 des Zwischenspeichers 10 einen Setzimpuls ab, wodurch der erwähnte, bisher vor dem Teil 11 des Zwischenspeichers 10 stehende Informationsteil des genannten vom Computer 8 gelieferten Datenblockes in diesen Teil 11 eingespeichert und über die Leitung 19 an den Digital-Analog-Converter 20 weitergeleitet und dort in ein entsprechendes analoges Industriesignal umgesetzt wird, das vom Digital-Analog-Converter 20 an die Ausgangsleitung 21 abgegeben wird. Im letzteren Fall, also bei Durchschaltung der UND-Schaltung 17 durch das Schaltsignal auf der Leitung 15, gibt die UND-Schaltung 17 an den monostabilen Multivibrator 22 einen Schaltimpuls ab, wodurch der monostabile Multivibrator 22 angestossen wird und daraufhin über eine bestimmte Zeitdauer an das Gatter 23 einen Durchschaltimpuls abgibt und damit den Ausgang des Analog-Digital-Converters 24 über die Leitung 25, das durchgeschaltete Gatter 23 und die Leitung 26 über diese bestimmte Zeitdauer mit der Datenleitung 4 verbindet. Am Ausgang des Analog-Digital-Converters 24 steht nun ständig das in einen Digitalwert umgesetzte, dem Eingang des Analog-Digital-Converters 24 über die Eingangsleitung 27 zugeführte analoge Industriesignal, das dem Computer 8 auf Abruf desselben über den Ein-Ausgabe-Teil 2 bzw. die zugeordnete Ein- und Ausgabeeinheit 1 zugeführt werden soll, und diese Zuführung erfolgt über die Datenleitung 4 während der Zeitdauer, in der das Gatter 23 von dem monostabilen Multivibrator 22 durchgeschaltet wird. Natürlich ist es möglich, über den gleichen Weg auch andere Informationen wie Informationen über den internen Zustand der Ein-und Ausgabeeinheit 1 an den Computer 8 zu übertragen, indem diese Informationen je nachdem, ob es analoge oder digitale Informationen sind, der Leitung 27 oder der Leitung 25 zugeführt werden, aber in diesem Fall muss ein Teil der in dem genannten Datenblock enthaltenen Infomationen für die Steuerung der Uebertragung solcher anderer Informationen, also im vorliegenden Fall für die Umschaltung der Leitungen 25 und 27 auf die Informationsquellen dieser anderen Informationen, vorgesehen werden.

In die mit ADR bezeichneten Adressspeicher-Teile 3 der Ein-und Ausgabeeinheiten 1 werden vom Computer 8 über die Adressleitung 6 die den einzelnen Ein- und Ausgabeeinheiten 1 zugeordneten Adressen eingespeichert. Die Fig. 3 zeigt ein Ausführungsbeispiel für den inneren Aufbau eines sol chen Adressspeicher-Teils 3, das für eine Einspeicherung der Adressen in der oben schon erwähnten zeitlichen und örtlichen Reihenfolge der die Kettenglieder einer Kette bildenden Ein- und Ausgabeeinheiten 1 vorgesehen ist, d.h. bei einer Ausbildung der Adressspeicher-Teile 3 bzw. der Blöcke ADR in Fig. 1 wie bei dem Ausführungsbeispiel in Fig. 3 werden die den einzelnen Ein- und Ausgabeeinheiten 1 zugeordneten Adressen vom Computer 8 nacheinander in einer der örtlichen Reihenfolge der Ein- und Ausgabeeinheiten 1 in Fig. 1 entsprechenden zeitlichen Reihenfolge einzeln im zeitlichen Abstand voneinander der Adressleitung 6 zugeführt und durch Ankoppelung des Adressspeichers 28 der jeweils zugeordneten Ein- und Ausgabeeinheit 1 an die Adressleitung 6 in den Adressspeicher 28 eingespeichert, wonach der Adressspeicher 28 wieder von der Adressleitung 6 abgekoppelt und der Adressspeicher des nächsten Kettengliedes bzw. der nächsten Ein- und Ausgabeeinheit 1 in der Kette an die Adressleitung bzw. den mit dem Computer 8 in Verbindung stehenden Teil derselben angekoppelt wird. Der Vorgang der Abkoppelung des Adressspeichers von der Adressleitung und der Ankoppelung der Adressleitung an den Adressspeicher bzw. die Adressleitung des nächsten Kettengliedes erfolgt dabei zweckmässig wie auch bei dem in Fig. 3 gezeigten Beispiel durch Umschaltung der Adressleitung von dem Adressspeicher auf Verbindungsmittel zur Adressleitung des nächsten Kettengliedes, aber es ist natürlich auch möglich, eine solche Umschaltung der Adressleitung zu vermeiden und stattdessen eine durch alle Adressspei cher-Teile 3 sämtlicher Ein- und Ausgabeeinheiten 1 durchgehende (nicht mit zwischengeschalteten Uebertragungsgliedern wie Gattern, Schieberegister usw. versehene) Adressleitung zu verwenden und nur die Adressspeicher an diese durchgehende Adressleitung anzukoppeln bzw. von dieser abzukoppeln (für diesen Fall wären in Fig. 3 die sechs Adern der Adressleitung 6 durchgehend auszubilden und das Gatter 29 würde nicht mehr in der Adressleitung 6 und der Setzleitung 7 sondern nur noch in der Setzleitung 7 liegen). Die Wirkungsweise des in Fig. 3 gezeigten Ausführungsbeispiels des Adressspeicherteils 3 ist folgende: Vor Beginn der Adresseinspeicherung durch den Computer 8 wird vom Computer 8 auf die Steuerleitung 5 ein eine binäre "1" darstellendes Schaltsignal gegeben, das in allen Adressspeicher-Teilen 3 sämtlicher Ein- und Ausgabeeinheiten 1 der Kette den bistabilen Multivibrator 30 in den "0"-Zustand setzt, so dass am "0"-Ausgang desselben sowie auf der Leitung 31 und damit auch an dem einen Eingang der UND-Schaltung 32 eine binäre "1" und am "1"-Ausgang desselben sowie auf der Leitung 33 und damit auch an dem Schalteingang des Gatters 29 eine binäre "0" steht und demgemäss die UND-Schaltung 32 durchgeschaltet und das Gatter 20 gesperrt wird. Danach beginnt die Adresseinspeicherung durch den Computer 8, und es sei der Einfachheit halber einmal angenommen, dass der Adressspeicher-Teil 3 in Fig. 3 zu dem ersten Kettenglied der Kette gehören würde und demgemäss die erste vom Computer 8 über die Adressleitung 6 gelieferte Adresse dem Adressspeicher-Teil 3 in Fig. 3 zugeordnet sei und somit in dessen Adressspeicher 28 einzuspeichern sei. Die Adresseinspeicherung durch den Computer 8 erfolgt nun dadurch, dass vom Computer 8 zuerst die erste Adresse auf die Adressleitung 6 gegeben wird und damit am Setzeingang des Adressspeichers 28 steht. Da das Gatter 29 gesperrt ist, wird diese Adresse nicht an die nachfolgenden Kettenglieder weitergegeben. Nunmehr gibt der Computer 8 an die Setzleitung 7 einen Setzimpuls ab, der über die Leitungen 34 und 35 sowie die durchgeschaltete UND-Schaltung 32 dem Adressspeicher 28 zugeführt wird und die Einspeicherung der am Setzeingang des Adressspeichers 28 stehenden Adresse in den Adressspeicher 28 bewirkt und ausserdem über die Leitung 36 den bistabilen Multivibrator 30 in den "1"-Zustand setzt, so dass am "0"-Ausgang desselben sowie auf der Leitung 31 und damit auch an dem einen Eingang der UND-Schaltung 32 wieder eine binäre "0" und am "1"-Ausgang desselben sowie auf der Leitung 33 und damit auch am Schalteingang des Gatters 29 wieder eine binäre "1" steht und demgemäss die UND-Schaltung 32 weider gesperrt und das Gatter 29 wieder durchgeschaltet wird. Zu bemerken ist in diesem Zusammenhang, dass die Impulsdauer des Setzimpulses wesentlich geringer als die Umschaltzeit des bistabilen Multivibrators 30 und andererseits wesentlich grösser als die Ansprechzeit der Setzmittel im Adressspeicher 28 sein muss, damit einerseits verhindert wird, dass der Setzimpuls und die Adresse über ein zu früh durchgeschaltetes Gatter 29 auch dem Adressspeicher des nächsten Kettengliedes zugeführt werden, und andererseits gewährleistet ist, dass die an dem Setzeingang des Adressspeichers 28 stehende Adresse fehlerfrei in den Adressspeicher 28 eingespeichert wird. Mit der Sperrung der UND-Schaltung 32 ist der Adressspeicher 28 von der Adressleitung 6 abgekoppelt, so dass auch bei den folgenden Adresseinspeicherungen keine Einspeicherung in den Adressspeicher 28 mehr erfolgen kann, und mit der Durchschaltung des Gatters 29 sind nunmehr Adressleitung und Setzleitung des nächsten Kettengliedes an den Computer 8 angeschlossen, so dass mit der nächsten vom Computer 8 gelieferten Adresse der gleiche Vorgang der Adresseinspeicherung beim nächsten Kettenglied wiederholt werden kann. Vor der Einspeicherung der nächsten Adresse kann der Computer 8 jedoch über die Datenleitung 4 die fehlerfreie Einspeicherung der Adresse in den Adressspeicher 28 überprüfen, wobei der Comparator 13 bei fehlerfreier Einspeicherung an die Leitung 15 ein Ausgangssignal abgibt, das über eine (in Fig. 3 nicht gezeigte) zweite Ader der Steuerleitung 5 dem Computer 8 als Kriterium für eine fehlerfreie Einspeicherung der Adresse in dem Adressspeicher 28 zugeführt werden kann. Bei paralleler Informationsübertragung vom Computer 8 zu den einzelnen Ein- und Ausgabeeinheiten 1 können übrigens bei dem Ausführungsbeispiel des Adressspeicher-Teils 3 in Fig. 3 die sechs Adern der Adressleitung 6 auch zur Uebertragung der in den genannten Datenblöcken enthaltenen Adressen verwendet werden, weil die Adressspeicher 28 nach der Adresseinspeicherung durch den Computer 8 ja von der Adressleitung 6 abgekoppelt sind. In diesem Fall wären die Eingänge des für die Adresse vor gesehenen Teils des Zwischenspeichers 10 mit den sechs Adern der Adressleitung 6 zu verbinden, und die Datenleitung 4 würde dann nur so viele Adern umfassen, wie für die parallele Uebertragung des Informationsteiles eines Datenblockes und das der Speicherzelle 18 zuzuführende, der Adresse vorangestellte eine Bit erforderlich sind. Eine solche Benutzung der Adressleitung 6 auch für die Uebertragung der Adressen im Rahmen der genannten Datenblöcke hat im übrigen neben der Einsparung einer Vielzahl von Adern noch den besonderen Vorteil, dass auch die zuvor erwähnte Ueberprüfung der fehlerfreien Einspeicherung von Adressen in die Adressspeicher 28 durch den Computer 8 besonders einfach und schnell erfolgen kann, weil in diesem Fall mit der Einspeicherung der Adresse in den Adressspeicher 28 bei fehlerfreier Einspeicherung am Ausgang des Comparators 13 ein Ausgangssignal erscheint, das über die Leitung 15 sowie eine (in Fig. 3 nicht gezeigte) zweite Ader der Steuerleitung 5 dem Computer 8 zugeführt wird und dem Computer 8 daher unmittelbar nach der Einspeicherung der Adresse eine Bestätigung der fehlerfreien Einspeicherung liefert, ohne dass der Computer 8 hierzu noch einen besonderen Ueberprüfungsvorgang einleiten und durchführen müsste.

Bei den in den Figuren 4 und 5 gezeigten Ausführungsbeispielen für den inneren Aufbau des Adressspeicher-Teils 3 der Ein- und Ausgabeeinheiten 1 werden die Adressen - im Gegensatz zu dem Ausführungsbeispiel in Fig. 3 - vom Computer in die Adressspeicher der von den Ein- und Ausgabeeinheiten 1 gebildeten einzelnen Kettenglieder der Kette nur in der örtlichen Reihenfolge der Kettenglieder,zeitlich jedoch gleichzeitig eingespeichert, d.h. die den einzelnen Kettengliedern zugeordneten Adressen werden vom Computer 8 über die Adressleitung 6 in der örtlichen Reihenfolge der Kettenglieder in ein Schieberegister eingeschoben, das sich aus in den einzelnen Adressspeicher-Teilen 3 vorgesehenen Schieberegisterteilen 37 in Fig. 4 bzw. 38 in Fig. 5 zusammensetzt, und innerhalb des Schieberegisters mit Hilfe von über die Steuerleitung 5 sowie die Leitung 39 bzw. 40 übertragenen Schiebeimpulsen von Schieberegisterteil 37 bzw. 38 zu Schieberegisterteil bzw. von Kettenglied zu Kettenglied weitergeschoben und befinden sich dann in dem zugeordneten Kettenglied bzw. der zugeordneten Ein- und Ausgabeeinheit 1, wenn vom Computer 8 sämtliche Adressen in das Schieberegister eingeschoben worden sind, und werden dann alle gleichzeitig mit Hilfe eines vom Computer 8 über die Setzleitung 7 sowie die Leitung 41 bzw. 42 übertragenen Setzimpulses in die Adressspeicher 43 bzw. 44 der zugeordneten Kettenglieder bzw. der zugeordneten Ein- und Ausgabeeinheiten 1 eingespeichert. Bei dem in Fig. 4 gezeigten Ausführungsbeispiel eines Adressspeicher-Teils 3 werden die Adressen dabei seriell über die Adressleitung 6 übertragen und Bit für Bit in den Schieberegisterteil 37 eingeschoben, der pro Registerstufe nur ein Bit und eine der Adresslänge entsprechende Stufenzahl aufweist, während bei dem in Fig. 5 gezeigten Ausführungsbeispiel eines Adressspeicher-Teils 3 die einzelnen Adressen parallel über die Adressleitung 6 übertragen und in den Schieberegisterteil 38 eingeschoben werden, der in diesem Fall eine Registerstufe des besagten Schieberegisters bildet und eine der Adresslänge entsprechende Anzahl von parallelen Speicherplätzen aufweist. Die Uebertragung der Adressen von dem Schieberegisterteil 37 bzw. 38 auf den Adressspeicher 43 bzw. 44 mit Hilfe des über die Setzleitung 7 sowie die Leitung 41 bzw. 42 übertragenen Setzimpulses erfolgt dann, wie in den Figuren 4 und 5 ersichtlich, bei beiden Ausführungsbeispielen in den Figuren 4 und 5 in paralleler Form. Eine Ueberprüfung der in die Adressspeicher 43 bzw. 44 eingespeicherten Adressen auf fehlerfreie Einspeicherung kann bei den Ausführungsbeispielen von Adressspeicher-Teilen 3 in den Figuren 4 und 5 erst nach der Einspeicherung sämtlicher Adressen vorgenommen werden, und zwar z.B. dadurch, dass der Computer 8 über die Datenleitung 4 nacheinander die einzelnen Adressen aufruft und die fehlerfreie Einspeicherung durch ein Ausgangssignal des Comparators 13 bestätigt und über die Leitung 15 sowie eine (in den Figuren 4 und 5 nicht gezeigte) zweite Ader der Steuerleitung 5 an den Computer 8 gemeldet wird.

Generell ist zu den Figuren 1 bis 5 darauf hinzuweisen,dass alle durch den Ein-Ausgabe-Teil E/A oder den Adressspeicher-Teil ADR er einzelnen Ein- und Ausgabeeinheiten 1 durchgehenden (also nicht mit zwischengeschalteten Uebertragungsgliedern wie Gattern, Schieberegistern usw. versehenen) Leitungen wie die Datenleitung 4 in Fig. 2, die Steuerleitung 5 in den Figuren 3, 4 und 5 und die setzleitung 7 in den Figuren 4 und 5 natürlich nicht zwingend durch die einzelnen Ein- und Ausgabeeinheiten 1 hindurchgeführt werden müssen sondern ebensogut auch aussen an den einzelnen Ein- und Ausgabeeinheiten 1 vorbeigeführt werden können, wobei dann die innerhalb der Figuren 2 bis 5 an diese durchgehenden Leitungen angeschlossenen Leitungen (wie z.B. 26 in Fig. 2, 34 in Fig. 3, 39 und 41 in Fig. 4, 40 und 42 in Fig. 5) entsprechend an diese aussen an den einzelnen Ein- und Ausgabeeinheiten 1 vorbeigeführten Leitungen angeschlossen sind. Die Figuren 1a bis 1d zeigen solche Aufbauschemen des vorliegenden Ein- und Ausgabesystems mit aussen an den einzelnen Ein- und Ausgabeeinheiten 1 vorbeigeführten Leitungen, und zwar nur der Datenleitung 4 in Fig. 1a, der Datenleitung 4 und der Steuerleitung 5 in Fig. 1b, der Datenleitung 4 und der Steuerleitung 5 und der Setzleitung 7 in Fig. 1c, und schliesslich der Datenleitung 4 und der Steuerleitung 5 und der Adressleitung 6 in Fig. 1d. Für die Aufbauschemen in den Figuren 1a und 1b eignen sich dabei als Ein-Ausgabe-Teil 2 der Ein-Ausgabe-Teil E/A in Fig. 2 und als Adressspeicher-Teil 3 jeder der Adressspeicher-Teile ADR in den Figuren 3 bis 5, für das Aufbauschema in Fig. 1c als Ein-Ausgabe-Teil 2 ebenfalls der Ein-Ausgabe-Teil E/A in Fig. 2 und als Adressspeicher-Teil 3 jeder der beiden Adressspeicher-Teile ADR in den Figuren 4 und 5 und für das Aufbauschema in Fig. 1d als Ein-Ausgabe-Teil 2a der Ein-Ausgabe-Teil E/A in Fig. 2a und als Adressspeicher-Teil 3a der Adressspeicher-Teil ADR in Fig. 3a. Bei dem Aufbauschema in Fig. 1c mit Ein-Aus gabe-Teilen 2 wie in Fig. 2 und Adressspeicher-Teilen 3 wie in Fig. 4 und bei dem Aufbauschema wie in Fig. 1d mit Ein-Ausgabe-Teilen 2a wie in Fig. 2a und Adressspeicher-Teilen 3a wie in Fig. 3a beschränkt sich dabei die Kettenanordnung der Ein- und Ausgabeeinheiten 1 bzw. 1a wie ersichtlich auf jeweils nur eine Leitung mit nur einer Leitungsader,nämlich die bei dem Adressspeicher-Teil in Fig. 4 nur eine Ader aufweisende Adressleitung 6 bzw. die bei dem Adressspeicher-Teil in Fig. 3a nur eine Ader aufweisende Setzleitung 7,während alle übrigen Leitungen - bei dem Aufbauschema in Fig. 1c also die Datenleitung 4, die Steuerleitung 5 und die Setzleitung 7 und bei dem Aufbauschema in Fig. 1d die Datenleitung 4, die Steuerleitung 5 und die Adressleitung 6 -aussen an den Ein- und Ausgabeeinheiten 1 bzw. 1a vorbeigeführt werden können und die Ein- und Ausgabeeinheiten 1 bzw. 1a somit an alle diese übrigen Leitungen in der früher üblichen Weise parallel angeschlossen werden können. Damit eröffnet sich die Möglichkeit, die erfindungsgemässe Adressspeicherung auch auf schon bestehende Ein- und Ausgabesysteme anzuwenden, bei denen die Ein- und/oder Ausgabeeinheiten parallel an eine Verbindungsleitung zum Computer angeschlossen sind, indem bezüglich einer Leitungsader anstelle des parallelen Anschlusses an die Verbindungsleitung zum Computer eine Kettenanordnung entsprechend Fig. 1c oder 1d eingeführt wird, und diese Möglichkeit erlaubt es, den mit der erfindungsgemässen Adressspeicherung erreichbaren hohen Sicherheitsstandard mit einem verhältnismässig geringen technischen Umrüstungsaufwand auch für schon bestehende Ein- und Ausgabesysteme nutzbar zu machen.

Beispiele der oben schon erwähnten Möglichkeiten zur Weiterbildung der Ein- und Ausgabeeinheiten des vorliegenden Ein-und Ausgabesystems, insbesondere der den Ein-Ausgabe-Teil 2 in Fig. 2 und den Adressspeicher-Teil 3 in Fig. 3 umfassenden Ein- und Ausgabeeinheit 1, sind schliesslich noch in der in den Figuren 2a und 3a gezeigten Ein- und Ausgabeeinheit 1a zusammengefasst.

Der in Fig. 3a gezeigte Adressspeicher-Teil 3a unterscheidet sich dabei von dem Adressspeicher-Teil 3 in Fig. 3 in drei oben schon im Zusammenhang mit der Fig. 3 als Variationsmöglichkeiten erwähnten Punkten, nämlich dass erstens die sechs Adern der Adressleitung 6 durchgehend ausgebildet sind und das Gatter 29 nicht mehr in der Adressleitung 6 und der Setzleitung 7 sondern als UND-Schaltung 29a nur noch in der Setzleitung 7 liegt und dass zweitens die sechs Adern der Adressleitung 6 auch zur Uebertragung der in den obengenannten Datenblöcken enthaltenen Adressen verwendet werden und hierzu die zum Comparator 13 führende Leitung (12 in Fig. 2) nicht mehr indirekt an die Datenleitung 4 sondern als Leitung 12a an die Adressleitung 6 angeschlossen ist und dass drittens die Steuerleitung 5 drei Adern 5a, 5b und 5c umfasst, von denen die Ader 5a in Fig. 3a an die Stelle der Ader 5 in Fig. 3 tritt und die Ader 5b in Fig. 3a die oben im Zusammenhang mit der Fig. 3 genannte zweite Ader der Steuerleitung 5 ist, über die dem Computer 8 ein vom Comparator 13 als Kriterium für eine fehlerfreie Einspeicherung der Adresse in den Adressspeicher 28 an die Leitung 15b abgegebenes Ausgangssignal zugeführt wird, und von de nen die Ader 5c zusammen mit den Leitungen 15c und 15d sowie der Relaisschaltung 45 als Mittel zur Lieferung von Informationen an den Computer 8 in Störfällen, hier speziell bei Stromausfällen, dient. Die Wirkungsweise des in Fig. 3a gezeigten Adressspeicher-Teils 3a entspricht in Bezug auf die Adressspeicherung vollständig der oben beschriebenen Wirkungsweise des Adressspeicher-Teils 3 in Fig. 3.

Der Ein-Ausgabe-Teil 2a in Fig. 2a enthält gegenüber dem Ein-Ausgabe-Teil 2 in Fig. 2, in dem nur die Grundfunktionen von Ein- und Ausgabeeinheiten bekannter Ein-und Ausgabesysteme realisiert sind, noch eine Reihe weiterer Bestandteile zur Erfüllung von über die Grundfunktionen hinausgehenden Spezialaufgaben, insbesondere je ein Beispiel für die oben schon näher erläuterten Mittel zur Lieferung von Informationen an den Computer in Störfällen, speziell bei Stromausfällen und bei Toleranzüberschreitungen in den Convertern 20 und 24 zur Analog-Digital- und Digital-Analog-Umwandlung, sowie für die ebenfalls oben schon erwähnten Mittel zur Lieferung von Informationen über die Identität der Ein- und Ausgabeeinheit 1a an den Computer und für die auch schon oben genannten Speichermittel zur Speicherung von die Funktionsweise der Ein- und Ausgabeeinheit 1a bestimmenden Steuerbefehlen einschliesslich der Mittel zur Aktivierung derselben durch den Computer.

Die Grundfunktionen sind bei dem Ein-Ausgabe-Teil 2a in Fig. 2a die gleichen wie bei dem Ein-Ausgabe-Teil 2 in Fig. 2: Der Computer 8 liefert an die Ein- und Ausgabeeinheit 1a über die Adressleitung 6 die Adresse der Ein- und Ausgabeeinheit 1a, mit der er in Datenverkehr treten will, und über die Datenleitung 4 die an die Ein- und Ausgabeeinheit 1a zu übermittelnden Daten. Die Adresse wird hier über die gesamte Dauer des Datenverkehrs aufrechterhalten, so dass der bei dem Ein-Ausgabe-Teil 2 in Fig. 2 für die Adresse vorgesehene Teil 9 des Zwischenspeichers 10 und auch der dadurch bedingte monostabile Multivibrat-or 22 bei dem Ein-Ausgabe-Teil 2a in Fig. 2a entfallen können. Die über die Adressleitung 6 gelieferte Adresse wird in der Ein- und Ausgabeeinheit 1a über die Leitung 12a dem Comparator 13 zugeführt, der diese Adresse mit der über die Leitung 14 vom Adressspeicher 28 im Adressspeicher-Teil 3a gelieferten Adresse vergleicht und bei Uebereinstimmung beider Adressen an jede seiner gegeneinander entkoppelten drei Ausgangsleitungen 15a, 15b und 15c ein eine binäre "1" darstellendes Schaltsignal abgibt. Das Schaltsignal wird über die an die Stelle der Leitung 15 in Fig. 2 tretende Leitung 15a dem an die Stelle der beiden UND-Schaltungen 16 und 17 in Fig. 2 tretenden Gatter 46 zugeführt und schaltet dieses für die Dauer des Datenverkehrs des Computers 8 mit der Ein- und Ausgabeeinheit 1a durch. Von den vom Computer 8 über die Datenleitung 4 gelieferten Daten dienen die Daten auf den oberen drei Adern der Datenleitung 4 in Fig. 2a zur Steuerung der Ein- und Ausgabeeinheit 1a, während die unteren sechs Adern der Datenleitung 4 in Fig. 2a für den eigentlichen Datenverkehr zwischen dem Computer 8 und der Ein- und Ausgabeeinheit 1a vorgesehen sind. Die vom Computer 8 über die oberen drei Adern der Datenleitung 4 in Fig. 2a gelieferten Daten bzw. Steuerbefehle werden dem Decoder 47 zugeführt, der an die Stelle der ebenfalls als Decoder wirkenden Speicherzelle 18 in Fig. 2 tritt und an denjenigen seiner acht Ausgänge, der dem Steuerbefehl auf den oberen drei Adern der Datenleitung 4 zugeordnet ist, ein eine binäre "1" darstellendes Ausgangssignal abgibt. Zur Betätigung der Grundfunktionen der Ein- und Ausgabeeinheit 1a, also zur Ein- und Ausgabe, dienen die beiden über das Gatter 46 mit den Leitungen 48 und 49 verbundenen Ausgänge des Decoders 47. Zur Datenausgabe über die Ein- und Ausgabeeinheit 1a wird aufgrund eines entsprechenden Steuerbefehls auf den oberen drei Adern der Datenleitung 4 vom Decoder 47 über das Gatter 46 und die Leitung 48 ein Setzsignal an den Setzausgang des (dem Teil 11 des Zwischenspeichers 10 in Fig. 2 entsprechenden) Speichers 11 abgegeben, wodurch die auf den unteren sechs Adern der Datenleitung 4 stehenden, zur Ausgabe bestimmten Daten in den Speicher 11 eingespeichert und über die sechsadrige Leitung 19 an den Digital-Analog-Converter 20 weitergeleitet und dort in ein entsprechendes analoges Industriesignal umgesetzt werden, das vom Digital-Analog-Converter 20 an die Ausgangsleitung 21 abgegeben wird. Zur Dateneingabe wird dem Analog-Digital-Converter 24 ständig über die Eingansleitung 27 sowie den Schalter 50 ein analoges Industriesignal zugeführt, das im Analog-Digital-Converter 24 in einen entsprechenden, am Ausgang des Converters 24 stehenden Digitalwert umgewan delt wird. Zu dieser ständigen Zuführung des analogen Industriesignals über den Schalter 50 steht dieser normalerweise in der die Eingangsleitung 27 mit dem Eingang der Analog-Digital-Converters 24 verbindenden Schaltstellung. Das wird dadurch erreicht, dass der Steuerbefehl auf den oberen drei Adern der Datenleitung 4 vom Computer vor der Beendigung der Zuführung der Adresse über die Adressleitung 6 beendet wird und damit vor Schliessung des Gatters 46 auf den oberen drei Adern der Datenleitung 4 je eine binäre "0" steht und daher an dem diesem Steuerbefehl "000" zugeordneten Ausgang des Decoders 47 in der Zwischenzeit zwischen Beendigung des Steuerbefehls und Beendigung der Adresse ein Ausgangssignal erscheint, das über das Gatter 46 und die Leitung 51 dem Setzeingang 52 des Schalters 50 zugeführt wird und den Schalter 50 auf die die Eingangsleitung 27 mit dem Eingang des Analog-Digital-Converters 24 verbindende Schaltstellung einstellt, in der der Schalter 50 bis zu einer Ein-Stellung in eine seiner beiden anderen Schaltstellungen verbleibt. Dieser normalen Schaltstellung des Schalters 50 entspricht bei dem Ein-Ausgabe-Teil 2 in Fig. 2 die bis zum Eingang des Analog-Digital-Converters 24 durchgehende Eingangsleitung 27. Soll der ständig am Ausgang des Analog-Digital-Converters 24 stehende Digitalwert des dem Eingang des Converters 24 zugeführten analogen Industriesignals vom Computer 8 abgerufen werden, Dann gibt der Computer 8 auf die oberen drei Adern der Datenleitung 4 einen Steuerbefehl, dessen Docodierung im Decoder 47 ein Ausgangssignal an dem über das Gatter 46 mit der Leitung 49 verbundenen Ausgang des Decoders 47 bewirkt, das über das Gatter 46 und die Leitung 49 dem Gatter 23 zugeführt wird und dieses durchschaltet und damit die Weiterleitung des am Ausgang des Analog-Digital-Converters 24 stehenden Digitalwertes über die sechsadrige Leitung 25 und das Gatter 23 sowie die unteren sechs Adern der Datenleitung 4 an den Computer 8 bewirkt.

Zur Lieferung von Informationen an den Computer 8 in Störfällen sind bei der Ein- und Ausgabeeinheit 1a für Stromausfälle die Relaisschaltung 45 mit den zugehörigen Leitungen 15c, 15d und 5c und für die Festsstellung etwaiger Toleranzüberschreitungen in den Convertern 20 und/oder 24 der Analog-Festwertspeicher 53 sowie der Schalter 50 mit zugehörigen Leitungen 54 bis 57 und Anpassungsnetzwerk 58 vorgesehen.

Bei Stromausfall fällt die Betriebsspannung an der Klemme 59 auf Null bzw. Erdpotential ab, so dass das Relais 60 stromlos wird und abfällt und damit der Relaiskontakt 61 geöffnet und der Relaiskontakt 62 geschlossen wird.Gleichzeitig fällt das Potential der Leitungen 15d und 5c, das vor dem Stromausfall infolge des Anschlusses dieser Leitungen über den hochohmigen Widerstand 63 an die Klemme 59 etwa gleich der (eine binäre "1" darstellenden) Betriebsspannung an der Klemme 59 war, auf das (eine binäre "0" darstellende) Erdpotential ab und bleibt auch nach dem Ende des Stromausfalles praktisch auf Erdpotential, weil der Widerstand der Relaiswicklung des Relais 60 vernachlässigbar klein gegen den hochohmigen Widerstand 63 ist und die nach dem dem Stromausfall wieder an der Klemme 59 liegende Betriebsspannung daher fast vollständig über dem hochohmigen Widerstand 63 des vom Wicklungswiderstand des Relais 60, dem geschlossenen Relaiskontakt 62 und dem Widerstand 63 gebildeten Spannungsteilers abfällt. Mithin steht auf der Steuerleitung 5c, auf der vor dem Stromausfall eine binäre "1" stand, nach dem Stromausfall eine binäre "0", durch die der Computer 8 zu einer neuen Adresseinspeichrung veranlasst wird. Ist diese Adresseinspeicherung erfolgt, dann gibt der Comparator 13 über seine Ausgangsleitung 15c an die Relaisschaltung 45 eine binäre "1" darstellendes Ausganssignal ab, das ein Anziehen des Relais 60 und damit die Wiederherstellung des Zustandes vor dem Stromausfall mit geschlossenem Relaiskontakt 61 und offenem Relaiskontakt 62 bewirkt, und da das Relais 60 damit über den geschlossenen Relaiskontakt 61 wieder an die Klemme 59 und damit an die Betriebsspannung angeschlossen ist, bleibt dieser Zustand bis zu einem nächsten Stromausfall aufrechterhalten.

Zur Feststellung etwaiger Toleranzüberschreitungen der Converter 20 und/oder 24 gibt der Decoder 47 aufgrund eines entsprechenden vom Computer 8 über die oberen drei Adern der Datenleitung 4 gelieferten Steuerbefehls an seinen über das Gatter 46 mit der Leitung 57 verbundenen Ausgang ein Ausgangssignal ab, das über das Gatter 46 und die Leitung 57 dem Schalter 50 zugeführt wird und die Einstellung des Schalters 50 auf seine den Eingang des Analog-Digital-Converters 24 mit der Leitung 56 verbindende Schaltstellung bewirkt. Danach gibt der Decoder 47 aufgrund eines weiteren vom Computer 8 gelieferten Steuerbefehls an seinen über das Gatter 46 mit der Leitung 48 verbundenen Ausgang ein Ausgangssignal ab, das über das Gatter 46 und die Leitung 48 dem Setzeingang des Speichers 11 zugeführt wird und die Einspeicherung der auf den unteren sechs Adern der Datenleitung 4 stehenden, zur Umwandlung in ein analoges Industriesignal im Digital-Analog-Converter 20 und zur anschliessenden Ausgabe über die Ausgangsleitung 21 bestimmten Daten in den Speicher 11 bewirkt. Das aufgrund dieser Daten vom Ausgang des Digital-Analog-Converters 20 abgegebene analoge Signal wird nun nicht nur der Ausgangsleitung 21 sondern auch der Leitung 56 und über diese (und erforderlichenfalls noch über ein Anpassungsnetzwerk 28 zu Anpassung eines mittleren Wertes des Ausgangssignals der Digital-Analog-Converters 20 an einen mittleren Wert des Eingangssignals des Analog-Digital-Converters 24) sowie über den Schalter 50 dem Eingang des Analog-Digital-Converters 24 zugeführt und in diesem wieder in ein digitales Signal umgewandelt, das über die sechsadrige Leitung 25 und das Gatter 23 sowie die unteren sechs Adern der Datenleitung 4 dem Computer 8 zugeführt wird. Hierzu gibt der Decoder 47 nach dem Setzsignal für den Speicher 11 aufgrund eines vom Computer gelieferten dritte Steuerbefehls an seinen über das Gatter 46 mit der Leitung 49 verbundenen Ausgang ein Ausgangssignal ab, das über das Gatter 46 und die Leitung 49 dem Gatter 23 zugeführt wird und das Gatter 23 durchschaltet und damit die Zuführung des vom Analog-Digital-Converter 24 abgegebenen digitalen Signals zum Compu ter 8 ermöglicht. Aus diesem digitalen Signal und den zuvor in den Speicher 11 eingespeicherten Daten kann der Computer 8 nun das Produkt der Umsetzungsfaktoren der beiden Converter 20 und 24 (sowie gegebenenfalls des Anpassungsnetzwerks 28) jeweils von Eingang zu Ausgang errechnen und mit einem Sollwert dieses Produktes vergleichen, der sich aus den in den Speicher 11 eingespeicherten Daten und der dem Computer 8 bekannten Umsetzungscharakteristik der beiden Converter 20 und 24 (sowie gegebenenfalls des Anpassungsnetzwerks 28) ergibt. Stimmt der Istwert mit dem Sollwert im Rahmen der zulässigen Toleranzen überein, dann kann davon ausgegangen werden, dass die 20 und 24 innerhalb der zulässigen Toleranzen arbeiten und somit keine Toleranzüberschreitungen festzustellen sind. Bei fehlender Uebereinstimmung von Istwert und Sollwert innerhalb der zulässigen Toleranzen oder einer nur in einen Grenzbereich der zulässigen Toleranzen fallenden Uebereinstimmung stellt der Computer 8 weiter fest, bei welchem der beiden Converter 20 oder 24 Toleranzüberschreitungen zu verzeichnen sind. Hierzu gibt der Decoder 47 aufgrund eines entsprechenden vom Computer 8 gelieferten vierten Steuerbefehls an seinen über das Gatter 46 mit der Leitung 55 verbundenen Ausgang ein Ausgangssignal ab, das über das Gatter 46 und die Leitung 55 dem Schalter 50 zugeführt wird und die Einstellung des Schalters 50 auf seine den Eingang des Analog-Digital-Converters 24 mit der Leitung 54 verbindende Schaltstellung bewirkt. Daraufhin gibt der Analog-Festwertspeicher 53 über seine Ausgangsleitung 54 und den Schalter 50 an den Eingang des Analog-Digital-Converters 24 einen festen Analogwert ab, der im Converter 24 in ein digitales Signal umgewandelt wird, das über die sechsadrige Leitung 25 und das Gatter 23 sowie die unteren sechs Adern der Datenleitung 4 dem Computer 8 zugeführt wird. Hierzu gibt der Decoder 47 nach dem Schaltsignal für den Schalter 50 aufgrund eines vom Computer 8 gelieferten fünften Steuerbefehls an seinen über das Gatter 46 mit der Leitung 49 verbundenen Ausgang ein Ausgangssignal ab, das über das Gatter 46 und die Leitung 49 dem Gatter 23 zugeführt wird und das Gatter 23 durchschaltet und damit die Zuführung des vom Analog-Digital-Converter 24 abgegebenen digitalen Signals zum Computer 8 ermöglicht. Aus diesem digitalen Signal und dem im Speicher 53 gespeicherten, dem Computer 8 bekannten festen Analogwert ergibt sich unmittelbar der Umsetzungsfaktor des Converters 24, mit dem der Computer 8 nunmehr aus dem zuvor bestimmten Produkt der Umsetzungsfaktoren der Converter 20 und 24 auch den Umsetzungsfaktor des Converters 20 bestimmen kann und durch Vergleich der Istwerte dieser Umsetzungsfaktoren mit ihren Sollwerten feststellen kann, bei welchem der beiden Converter 20 und 24 eine Toleranzüberschreitung vorliegt und wie gross die Toleranzen der beiden Converter 20 und 24 sind. Diese Toleranzen kann der Computer 8 dann einfach rechnerisch kompensieren, indem er alle künftigen Einganswerte des Converters 20 und alle künftigen Ausgangswerte des Converters 24 um die Toleranz des Converters 20 bzw. 24 ändert. Nach Abschluss der Feststellung etwaiger Toleranzüberschreitungen der Converter 20 und/oder 24 wird der Schalter 50 dann in der oben beschriebenen Weise in seine normale Schaltstellung, also die Verbindung der Eingangsleitung 27 mit dem Eingang des Converters 24, zurückgestellt.

Zur Lieferung von Informationen über die Identität der Ein-und Ausgabeeinheit 1a an den Computer 8 sind bei der Ein-und Ausgabeeinheit 1a der diese Identitätsinformationen speichernde Festwertspeicher 64 sowie das Gatter 65 mit der Schaltleitung 66 vorgesehen. Will der Computer solche Identitätsinformationen aus dem Speicher 64 abrufen, dann führt er dem Decoder 47 über die drei oberen Adern der Datenleitung 4 einen Steuerbefehl zu, der den Decoder 47 veranlasst, an seinen über das Gatter 46 mit der Leitung 66 verbundenen Ausgang ein Ausgangssignal abzugeben, das über das Gatter 46 und die Schaltleitung 66 die Durchschaltung des Gatters 65 bewirkt, so dass die am Ausgang des Festwertspeichers 64 stehenden Identitätsinformationen über das Gatter 65 und die unteren sechs Adern der Datenleitung 4 dem Computer 8 zugeführt werden.

Als Speichermittel zur Speicherung von die Funktionsweise der Ein- und Ausgabeeinheit 1a bestimmenden Steuerbefehlen ist bei der Ein- und Ausgabeeinheit 1a als besonders einfaches Beispiel der bistablie Multivibrator 67 vorgesehen, und als Mittel zur Aktivierung dieser Speichermittel durch den Computer dienen bei der Ein- und Ausgabeeinheit 1a die beiden Setzleitungen 68 und 69 sowie ferner die oberen drei Adern der Datenleitung 4, der Decoder 47 und das Gatter 46. Mittels des als binärer Speicher dienenden bistabilen Multivibrators 67 kann der Digital-Analog-Converter 20 auf zwei unterschiedliche Umsetzungsfaktoren eingestellt werden. Die Einstellung auf den einen oder anderen Umsetzungsfaktor erfolgt dadurch, dass der Decoder 47 aufgrund eines entsprechenden vom Computer 8 über die oberen drei Adern der Datenleitung 4 gelieferten Steuerbefehls an einen seiner beiden über das Gatter 46 mit den beiden Setzleitungen 68 und 69 verbundenen Ausgänge ein Ausgangssignal abgibt, das über das Gatter 46 und die Setzleitung 68 oder 69 dem entsprechenden Setzeingang des bistablien Multivibrators 67 zugeführt wird und den bistabilen Multivibrator 67 in die entsprechende Speicherstellung setzt, in der der bistabile Multivibrator 67 an den Digital-Analog-Converter 20 ein die Einstellung des entsprechenden Umsetzungsfaktors bewirkendes Ausgangssignal abgibt, das bis zu einer Einstellung des bistabilen Multivibrators 67 in die andere seiner beiden Speicherstellungen aufrechterhalten bleibt und somit auch den eingestellten Umsetzungsfaktor aufrechterhält.

**Ansprüche**

1. Ein- und Ausgabesystem zum Anschluss an einen programmgesteuerten Computer mit einer Vielzahl von einzeln ansteuerbaren Ein- und/oder Ausgabeeinheiten, von denen jede Mittel zur Speicherung einer der Einheit zugeordneten Adresse enthält,dadurch gekennzeichnet,dass die einzelnen Ein- und/oder Ausgabeeinheiten (1,1a) Kettenglieder von mindestens einer Kette solcher Einheiten (1,1a) bilden, in der das erste Kettenglied mit dem Computer (8) und alle übrigen Kettenglieder mindestens in Bezug auf wenigstens eine für die Adressspeicherung dienende Leitung (6,7) oder Leitungsader (6,7) mit dem jeweils vorangehenden Kettenglied verbunden sind, und dass die in den einzelnen Ein- und/oder Ausgabeeinheiten (1,1a) vorgesehenen Mittel zur Speicherung der der Einheit zugeordneten Adresse einen elektronisch einstellbaren Adressspeicher (28,43,44) und Mittel (5,5a,6,29,29a,30,33,37,38,39,40) zur elektronischen Einstellung des Adressspeichers auf eine vom Computer gelieferte Adresse und Mittel (5,5a,7,30,31,32, 34,35,36,41,42) zur Abkoppelung des Adressspeichers von den Einstellmitteln nach der Einstellung sowie zur erneuten ankoppelung des Adressspeichers an die Einstellmittel vor einer Neueinstellung umfassen.

2. System nach Anspruch 1, dadurch gekennzeichnet,dass jedes der genannten übrigen Kettenglieder über eine vorzugsweise sämtliche zum Verkehr mit dem Computer (8) vorgesehenen Leitungen (4,5,6,7) umfassende Sammelleitung mit dem jeweils vorangehenden Kettenglied verbunden ist.

3. System nach Anspruch 1 oder 2,dadurch gekennzeichnet,dass die Einstellmittel in jeder Ein- und/oder Ausgabeeinheit (1, 1a) eine Adressleitung (6) und Verbindungsmittel zur Adressleitung des nächsten Kettengliedes sowie Schaltmittel (5,5a, 29,29a,30,33) zur Steuerung von An- und Abkoppelung des Adressspeichers (28) an die bzw. von der Adressleitung (6), vorzugsweise in Form von Umschaltmitteln (5,29,30,33) zur alternativen Ankoppelung der Adressleitung (6) an den Adressspeicher (28) oder die Verbindungsmittel umfassen.

4. System nach Anspruch 1 oder 2,dadurch gekennzeichnet,dass die Einstellmittel in jeder Ein- und/oder Ausgabeeinheit (1) einen Teil (37,38) eines zur Zwischenspeicherung von Adressen oder Adressteilen sowie zur Weiterbeförderung derselben von Kettenglied zu Kettenglied vorgesehenen Schieberegisters,eine über den Schieberegisterteil (37,38) führende Adressleitung (6) mit Verbindungsmitteln zum Anschluss der Adressleitungen der benachbarten Kettenglieder, eine an den Schieberegisterteil (37,38) angeschlossene Steuerleitung (39,40) zur Uebertragung von Schiebeimpulsen und Datenübertragungsmittel zur Uebertragung von in dem Schieberegisterteil (37, 38) stehenden Daten auf den Adressspeicher (43,44) umfassen.

5. System nach einem der Ansprüche 1 bis 4, dadurch gekennzeichnet, dass die Mittel zur An- und Abkoppelung des Adressspeichers (28,43,44) an die bzw. von den Einstellmitteln (6) mit dem Adressspeicher kombinierte Setzmittel sind,mit denen der Adressspeicher (28,43,44) bei Anlegen eines Setzsignals an den Adressspeicher bzw. die mit diesem kombinierten Setzmittel an die Einstellmittel (6) angekoppelt wird und bei Fehlen eines solchen Setzsignals von den Einstellmitten (6) abgekoppelt ist, und dass jede Ein- und/oder Ausgabeinheit (1,1a) eine Setzleitung zur Uebertragung eines vom Computer (8) gelieferten Setzsignals an den Adressspeicher (28,43,44) bzw. die mit diesem kombinierten Setzmittel umfasst.

6. System nach einem der Ansprüche 1 bis 5, dadurch gekennzeichnet, dass die Ein- und/oder Ausgabeeinheiten (1,1a) Mittel (4,5c,15c,15d,23-25,45-50,53-63) zur Lieferung von Informationen an den Computer (8) in Störfällen enthalten.

7. System nach einem der Ansprüche 1 bis 6, dadurch gekennzeichnet,dass die Ein- und/oder Ausgabeeinheiten (1,1a) Mittel (4,46,47,64,65,66) zur Lieferung von Informationen über die Identität der betreffenden Einheit (1,1a) an den Computer (8) enthalten.

8. System nach einem der Ansprüche 1 bis 7, dadurch geknenzeichnet, dass die Ein- und/oder Ausgabeeinheiten (1,1a) Speichermittel (67) zur Speicherung von die Funktionsweise der betreffenden Ein- und/oder Ausgabeeinheit bestimmenden Steuerbefehlen bzw. - programmen und Mittel (4,46,47,68,69) zur Aktivierung derselben durch den Computer (8) enthalten

9. Ein- und/oder Ausgabeeinheit für ein Ein- und Ausgabesystem nach einem der Ansprüche 1 bis 8.

Fig. 1

Fig. 2

Fig. 3

Fig. 4

Fig. 5

Fig. 3a

Fig. 2a

Fig.1d

Fig.1c

Fig.1b

Fig.1a